(19) Europäisches Patentamt
European Patent Office
Office européen des brevets

(11) **EP 4 425 136 A1**

(12) **EUROPEAN PATENT APPLICATION**

(43) Date of publication:
**04.09.2024 Bulletin 2024/36**

(21) Application number: **24159586.7**

(22) Date of filing: **26.02.2024**

(51) International Patent Classification (IPC):
**G01L 5/04** *(2006.01)*   **A63B 21/28** *(2006.01)*
**D07B 1/14** *(2006.01)*   **G01L 5/101** *(2020.01)*

(52) Cooperative Patent Classification (CPC):
**G01L 5/047; A63B 21/00196; A63B 21/151;**
**A63B 21/28; D07B 1/145; G01L 5/042;**
**G01L 5/101;** A63B 2220/806

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **02.03.2023 ES 202330339 U**

(71) Applicant: **Universidad de Deusto**
**48007 Bilbao (Vizcaya) (ES)**

(72) Inventors:
• **Goti Elordi, Aitor**
  **BILBAO (ES)**
• **Cortés Martínez, Fernando**
  **BILBAO (ES)**
• **Landeta Abrisketa, Iker**
  **BILBAO (ES)**
• **Castañeda Babarro, Arkaitz**
  **BILBAO (ES)**

(74) Representative: **Ezcurra Zufia, Maria Antonia**
**Iparraguirre, 15 - 2° A**
**48009 Bilbao (ES)**

(54) **ROPE OR CABLE WITH VIBRATION FREQUENCY METERS**

(57)   The object of the present invention is a rope or cable provided with vibration frequency meters which enable the individual and joint efforts made on a rope or similar to be measured from the values transmitted by the vibration frequency meters. It is a characteristic of the invention that a series of vibration frequency meters are secured or attached on a rope or cable, thus achieving what has been called a digital rope, that is to say, a rope that enables the individual efforts exerted in each zone and the joint effort to be determined.

FIG.1

## Description

## OBJECT OF THE INVENTION

As stated in the title of the invention, the object of the present invention is a rope or cable provided with vibration frequency meters which enable the individual and joint efforts made on a rope or similar to be measured from the values transmitted by the vibration frequency meters.

It is a characteristic of the invention that a series of vibration frequency meters are secured or attached on a rope or cable, thus achieving what has been called a digital rope, that is to say, a rope that enables the individual efforts exerted in each zone and the joint effort to be determined.

The rope that forms the object of the invention is for use primarily, but not restrictively, for the game of tug-of-war (tug of war, tug o' war, tug war, rope war, rope pulling, or tugging war) in which two teams with the same number of members, with a combined weight not exceeding the maximum specified weight for a given category, line up at either end of a rope facing each other, each team pulling in opposite directions. The rope that forms the object of the invention determines the profiles of the force exerted by each member of each team and by the team as a whole.

The present invention therefore pertains on the one hand, to means for measuring tension in cables and similar, and on the other hand, to the ambit of ropes.

## BACKGROUND TO THE INVENTION

In the prior art, the use of diverse sensors fitted to cables and elements subjected to tension for the purposes of determining the tension to which said cables are subjected is well known.

In the prior art, smart ropes housing a number of sensors, such as those described in patents WO2017043692, CN201689345U, US20150265869, are well known. The existence of digital ropes, such as those described in patents US5662561 and US8123586, is also known. Publications also exist disclosing accelerometers housed inside the ropes such as those described in patents CN103998367B and EP2197775. Other cables seek to estimate the sway suffered by an elevator, as described in patent US20130275081, or to control the tension in a rope between two points, US20150008075. Patents also exist that seek to measure the tension to which the ropes are subjected, such as patents US6901818, DE20201105186U1, US4171640, CN101319946A, US6123176, CA2395373.

None of the above documents disclose systems or ropes that measure tension in a rope or cable based on vibration frequency.

However, when a cable or rope is subjected to individually apply tensile forces, it has been seen to be necessary to determine the force or tension profile to which each zone is subjected, in order that the overall force profile of the entire cable or rope can subsequently be ascertained.

The object of the present invention is therefore to develop a rope or similar in a digitalised manner that enables the individual forces applied to the rope to be determined, on the basis of the frequency of vibration of the tension exerted on the rope, by developing a rope or cable such as that described hereinafter, whose essentiality is set out in the first claim.

## DESCRIPTION OF THE INVENTION

The object of the present invention is a digitalised rope or cable on which are arranged a series of positionable means of measuring the vibration frequency of the rope.

In one possible embodiment such means for measuring the vibration frequency may be triaxial accelerometers.

The means for measuring the vibration frequency are positionable means, i.e. means that can be fixed on the rope wherever best suits, and a series of clamps can be used to secure them.

The means for measuring the vibration frequency also have means of wireless transmission to means of processing external to the rope or cable. It is thus possible to ascertain the force exerted, its profile, and intensity by each user positioned just after each vibration frequency meter, and the joint force exerted by a team.

The means for measuring the frequency are regularly arranged in certain positions, preferably before the gripping point on the rope -in relation to the direction in which the force is exerted- so that the force exerted at that point by a user or external force can be determined.

Complementarily, in order to obtain additional information about the displacement of the rope in one direction or another, it may have a system of cameras associated with each vibration frequency measurement sensor to measure the distance or displacement of the rope.

In one possible embodiment, the cameras are high-resolution, high-speed cameras located perpendicular to the rope and are used for:

    a) estimating the distance of the rope between two pullers that is not touching either of them
    b) capturing also the frequency at which the rope vibrates, which is possible due to its high speed.

In this way, both the triaxial accelerometers and the high-speed, high-definition cameras can be used to obtain the frequency values that will be used to calculate the stress of each puller. This dual measurement will serve:

    a) to validate the two measurements, if they are sufficiently similar, or to detect errors of measurement errors, if the result is significantly different, and also b) to reinforce the system of measurement, since it will act as a parallel system that will continue to function in the event that one of the two techniques, camera or accelerometer, ceases to operate.

The vibration frequency measuring sensors are triaxial accelerometers which measure the frequency of vibrations in both the vertical and horizontal axis of the rope or cable. The reason for measuring the vibration frequency on the horizontal axis is to measure the acceleration in motion, which can provide information to contrast that of the tension coming from the frequency.

Unless otherwise indicated, all technical and scientific elements used in this specification have the meaning habitually understood by a person skilled in the art to which this invention pertains. In the practice of the present invention, similar or equivalent procedures and materials to those described in the record can be used.

Throughout the description and the claims, the words "contains" or "comprises" and its variants are not intended to exclude other technical characteristics, additives, components or steps. For experts in the field, other objects, advantages and characteristics of the invention will emerge partly from the description and partly from practice with the invention.

## DESCRIPTION OF FIGURES

To complete the description made herein and in order better to aid understanding of the characteristics of the invention, in accordance with a preferential example of a practical embodiment thereof, this description is accompanied by a set of drawings showing as follows in indicative, but not restrictive terms.

Figure 1 shows a representation of a rope on which two people are pulling in opposite directions.

Figure 2 shows an example of an arrangement of two teams pulling a rope in opposite directions, depicting measuring sensors removably attached to the rope or cable and a series of cameras arranged opposite each sensor.

Figure 3 shows a rope on which a camera has been placed transversely on each side.

## PREFERRED EMBODIMENT OF THE INVENTION.

As per the figures, one preferred embodiment of the proposed invention is described below.

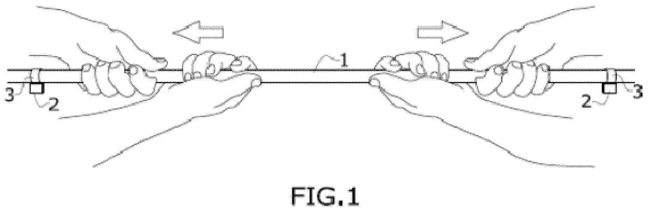

Figure 1 shows a rope or cable (1) on which two persons are pulling in opposite directions and on which vibration frequency measuring sensors (2) are positionably fixed to the rope or cable, in one possible embodiment, by means of clamps (3).

In other words, the vibration frequency measurement sensors can be placed wherever best suits on the rope or cable.

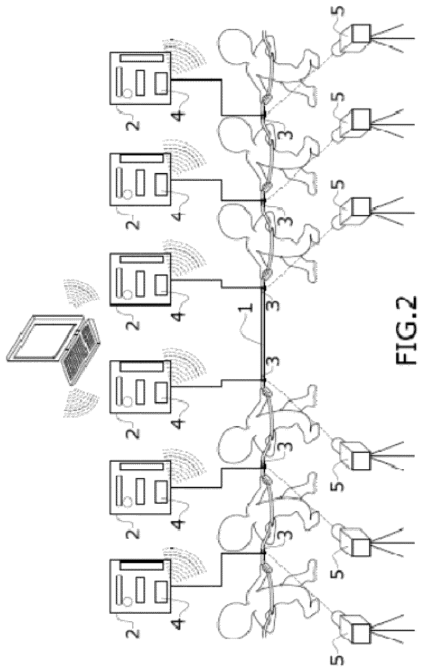

Figure 2 shows two teams of players pulling in opposite directions on a rope or cable wherein thanks to the vibration frequency measuring sensors (2) attached externally on the rope or cable it is possible to obtain over time the individual force profiles of each player, and the force profile of each team. In this figure one can observe that opposite each vibration frequency measuring sensor (2) there is a camera (5).

As can be seen the means of measuring the vibration frequency are arranged on the rope or cable and preferably just before the gripping point of each player, thus enabling the profile and intensity of the force exerted by each player to be determined.

In one possible embodiment, the means for measuring vibration frequency are triaxial accelerometers and are provided with means for wireless transmission (4) of the measured values to a computer or external means of processing.

In one possible non-restrictive embodiment, the force exerted at each point is calculated from the vibration frequency of the section in which that point is located, the length of that section and the density of the rope or cable.

$$f_1 = \frac{1}{2L}\sqrt{\frac{S}{\mu}} \rightarrow S = 4\mu L^2 f_1{}^2$$

Where*:

S is the tension in the rope.
L is the length of each length of rope or cable, between one puller and the next.
f1 is the vibration frequency of that section.
$\mu$ is the mass per unit of length of the rope.

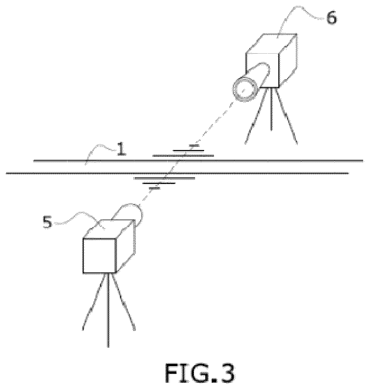

Complementarily, the rope or cable, in addition to having the means for measuring the vibration frequency, can have cameras (5), as shown in Figure 3, which in the embodiment shown comprise at least two cameras, a first camera (5) and a second camera (6), perpendicular to the pull, such that they 'see' the vibration to which the rope is subjected, due to their high resolution and speed.

In its application to the game of tug-of-war this would make it possible to determine the weak points of each team, those places where improvements might be made and what the most suitable type of force to be exerted in each competition would be.

Having sufficiently described the nature of the present invention, and the means of implementing it, it is noted that within the same essentiality, it may be made in other embodiments differing in detail from that indicated herein as an example, and to which the protection obtained shall equally extend, provided that it does not alter, change or modify its basic principle.

**Claims**

1. A digitalised rope or cable **characterised in that** it comprises a series of positionable means on the rope for measuring the vibration frequency of the rope, wherein each of the positionable means for measuring the vibration frequency has means of wireless transmission (4) to external means of processing.

2. A digitalised rope or cable according to Claim 1 **characterised in that** in one possible embodiment said means for measuring the vibration frequency are triaxial accelerometers.

3. A digitalised rope or cable according to Claim 2 **characterised in that** the triaxial accelerometers measure the frequency of vibrations in both the vertical and horizontal axis of the rope or cable.

4. A digitalised rope or cable according to Claim 1 or 2 or 3 **characterised in that** additionally the rope has high resolution and high-speed cameras located perpendicular to the rope and they serve to:

   a) enable the distance of the rope between two pullers that is not touching either of them to be determined
   b) enable also the frequency at which the rope vibrates to be determined, which is possible due to their high speed.

5. A digitalised rope or cable according to Claim 1 or 2 or 3 **characterised in that** each vibration frequency measurement device (2) comprises at least two cameras, a first camera (5) and a second camera (6), perpendicular to the direction of pull, such that they see the vibration to which the rope is subjected, due to their high resolution and speed.

6. A digitized rope or cable according to any of the above claims, **characterised in that** the force exerted at each point is calculated from the vibration frequency of the section in which that point is located, the length of that section and the density of the rope or cable.

$$f\_1 = 1/2L \ \sqrt{(S/\mu)} \ \rightarrow S = 4\mu L^2 \ [\![f\_1]\!]^2$$

Where*:

   S is the tension in the rope.
   L is the length of each length of rope or cable, between one puller and the next.
f1 is the vibration frequency of said section.
μ is the mass per unit of length of the rope.

7. A digitalised rope or cable according to any of the above claims, **characterised in that** the means for measuring the vibration frequency are positionably attached to the rope or cable by means of a clamp (3).

FIG.1

FIG.2

FIG.3

Europäisches
Patentamt

European
Patent Office

Office européen
des brevets

# EUROPEAN SEARCH REPORT

Application Number

EP 24 15 9586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 454 272 A (MILLER MARK F [US] ET AL) 3 October 1995 (1995-10-03) * abstract * * figures 1, 3 * | 1-7 | INV. G01L5/04 A63B21/28 D07B1/14 G01L5/101 |
| X | DE 195 31 858 B4 (DEUTSCHE TELEKOM AG [DE]) 9 June 2005 (2005-06-09) * abstract * * paragraph [0014] * * figure 1 * | 1-7 | |
| X | EP 3 885 487 A1 (UNIV DE LA IGLESIA DE DEUSTO [ES]) 29 September 2021 (2021-09-29) * paragraph [0013] * * figure 1 * | 1-7 | |
| A | CN 113 607 321 A (CHONGQING WUKANG TECH CO LTD) 5 November 2021 (2021-11-05) * abstract * * figure 7 * | 4,5 | |

TECHNICAL FIELDS
SEARCHED          (IPC)

G01L
A63B
D07B

The present search report has been drawn up for all claims

| Place of search | Date of completion of the search | Examiner |
|---|---|---|
| The Hague | 3 June 2024 | Grewe, Clemens F. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 15 9586

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2024

| Patent document cited in search report | | Publication date | Patent family member(s) | | Publication date |
|---|---|---|---|---|---|
| US 5454272 | A | 03-10-1995 | NONE | | |
| DE 19531858 | B4 | 09-06-2005 | NONE | | |
| EP 3885487 | A1 | 29-09-2021 | EP 3885487 A1 | | 29-09-2021 |
| | | | WO 2021160904 A1 | | 19-08-2021 |
| CN 113607321 | A | 05-11-2021 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017043692 A
- CN 201689345 U
- US 20150265869 A
- US 5662561 A
- US 8123586 B
- CN 103998367 B
- EP 2197775 A
- US 20130275081 A
- US 20150008075 A
- US 6901818 B
- DE 20201105186 U1
- US 4171640 A
- CN 101319946 A
- US 6123176 A
- CA 2395373